# EUROPÄISCHE PATENTANMELDUNG

(11) **EP 1 524 464 A2**
(43) Veröffentlichungstag der Anmeldung: **20.04.2005**
(21) Anmeldenummer: 04024389.1
(22) Anmeldetag: 13.10.2004
(51) Int. Cl.: F16L 13/14, B21D 39/04

(54) **Werkzeug zur Durchführung eines Rohrverbindungsvorganges sowie Haltehülse**

(30) Priorität: 16.10.2003 DE 20315938 U
(71) Anmelder: IPA Produktions- und Vertriebsges.m.b.H., 3163 Rohrbach (AT)
(72) Erfinder: Ogris, Bernhard, 2511 Paffstätten (AT)
(74) Vertreter: Schwabe - Sandmair - Marx

(57) **Zusammenfassung**

Die vorliegende Erfindung betrifft ein Werkzeug zur Durchführung eines Verbindungsvorganges bei Rohrverbindungen, beispielsweise Verbundrohrverbindungen, insbesondere Presswerkzeug mit einem Verbindungsbetätigungsabschnitt (14), insbesondere einem Pressverbindungsabschnitt, einem Antriebsabschnitt (12), der den Verbindungsbetätigungsabschnitt zur Durchführung eines Verbindungsvorganges antreibt, einem Markierungsabschnitt (16), der an dem Werkzeug (10) angeordnet ist, wobei der Markierungsabschnitt (16) an den Verbindungsabschnitt angekoppelt ist, um im Falle der Durchführung einer Verbindungsbetätigung eine Markierung zu hinterlassen.

## Beschreibung

Die Erfindung betrifft ein Werkzeug zur Durchführung eines Verbindungsvorganges bei Rohrverbindungen, beispielsweise Verbundrohrverbindungen, insbesondere ein Presswerkzeug, gemäß dem Oberbegriff des Patentanspruchs 1.

Im Stand der Technik sind diverse Verbindungsanordnungen bekannt, bei denen ein Rohr an einer Verbindungsanordnung festgelegt wird. In der Regel besteht eine solche Verbindungsanordnung aus einer Stützhülse, auf die ein Rohr aufgeschoben wird, und zwar bis zu einem Anschlag, der endseitig an der Stützhülse vorgesehen sein kann. Auf dieses aufgeschobene Rohrende wird dann eine Haltehülse aufgeschoben, wobei bereits durch das Aufschieben eine mechanische Festlegung des Rohres auf der Stützhülse bewerkstelligt werden kann. Andererseits ist es auch möglich, die Haltehülse in der Form einer Presshülse vorzusehen, die dann mittels einer Presszange dauerhaft radial einwärts verformt wird, um die verpresste bzw. deformierte Hülse zusammen mit dem darunter liegenden deformierten Rohr auf der Stützhülse festzuklemmen.

Bei diesen Verbindungsanordnungen kommt es nun nicht selten vor, dass von außen nicht erkennbar ist, ob die Verbindung bereits bewerkstelligt ist, oder ob die einzelnen Elemente der Verbindung nur lose vormontiert sind. Wird es übersehen, eine solche Verbindung tatsächlich auszuführen oder wird die Verbindung nur teilweise ausgeführt, kann dies zu erheblichen Schäden führen, wenn beispielsweise aufgrund einer undichten Verbindung ein Rohbau überschwämmt wird, bzw. bei Dichtigkeitsprüfungen ein Druckverlust festgestellt wird, wobei dann allerdings nicht sichtbar ist, welche der in einem Wasserleitungsnetz oder einem Zentralheizungsnetz vorgesehenen Verbindungsanordnungen undicht sein könnte. Eine Suche nach einer nicht vollendeten, undichten Verbindungsanordnung gestaltet sich dann als sehr aufwändig. Es ist eine Aufgabe gemäß der vorliegenden Erfindung, Mittel zur Verfügung zu stellen, um es klar erkennbar zu machen, dass eine Verbindungsanordnung nicht nur lose zusammengesteckt ist, sondern tatsächlich an dieser Verbindungsanordnung ein Verbindungsvorgang durchgeführt worden ist, so dass die Verbindungsanordnung eine mechanisch feste und eine dichte Verbindung abgibt.

Aus der DE 199 45 113 A1 ist eine Farbmarkiereinrichtung bekannt, die aus einer farblichen Markierung besteht, die durch abrasive Bearbeitung individualisiert wird, um eine Aussagekraft zu erhalten.

Diese Aufgabe wird wenigstens teilweise, bevorzugt insgesamt durch den Gegenstand gemäß dem Patentanspruch 1 gelöst.

Zweckmäßige Ausführungsformen der erfindungsgemäßen Gegenstände gehen aus den Unteransprüchen hervor.

Gemäß einem Aspekt der vorliegenden Erfindung wird ein Werkzeug zur Durchführung eines Verbindungsvorganges bei Rohrverbindungen, beispielsweise Verbundrohrverbindungen, insbesondere ein Presswerkzeug zur Verfügung gestellt, das mit einem Markierungsabschnitt versehen ist, der an dem Werkzeug so angeordnet ist, dass dieser im Falle der Durchführung einer Verbindungsbetätigung eine Markierung so hinterlässt, dass diese bevorzugt leicht erkennbar ist.

Festzuhalten ist, dass gemäß der Erfindung natürlich beliebige Rohrverbindungen mit Markierungen verpresst werden können, wie etwa Verbindungen für Kunststoffrohere, Metallrohre, Rohre mit Schichten aus gleichen oder unterschiedlichen Materialien und dergleichen mehr.

Vorteilhafterweise ist zwischen dem Verbindungsbetätigungsabschnitt und dem Antriebsabschnitt eines Werkzeuges gemäß der Erfindung ein Getriebeabschnitt angeordnet, der eine Antriebskraft des Antriebsabschnittes auf den Verbindungsbetätigungsabschnitt überträgt.

Vorteilhaft ist es, wenn der Markierungsabschnitt mit dem Antriebsabschnitt, dem Getriebeabschnitt oder dem Verbindungsbetätigungsabschnitt direkt verbunden ist, um eine an dem Markierungsabschnitt vorgesehene Markierungseinrichtung im Falle der Durchführung eines Verbindungsvorganges zu betätigen. Wird dementsprechend ein Verbindungsvorgang ausgelöst, in dem der Verbindungsbetätigungsabschnitt, etwa ein Abschnitt mit Pressbacken, aktiviert wird, kann dabei eine Markierungseinrichtung mitbewegt werden, um beispielsweise auf einem zugänglichen Rohrbereich, der an die Verbindungsanordnung anschließt, eine Markierung zu hinterlassen. Natürlich ist es auch möglich, den Markierungsabschnitt nur indirekt an den Verbindungsbetätigungsabschnitt anzukoppeln, d.h., dem Markierungsabschnitt einen separaten Antrieb zu geben, etwa einen elektrischen Schrittmotor oder dgl., so dass bei der Auslösung bzw. Durchführung eines Verbindungsvorganges der Markierungsabschnitt separat bewegt wird. Der Einfachheit halber ist es jedoch zu bevorzugen, den Markierungsabschnitt mit dem gleichen Antriebsabschnitt zu aktivieren, mit dem auch die Kraft für den Verbindungsvorgang aufgebracht wird.

Besonders vorteilhaft ist dabei die vorliegende Erfindung in Bezug auf ein Werkzeug, bei dem der Verbindungsvorgang durch eine axiale Verschiebung eines Halteringes in Bezug auf eine Stützhülse bewerkstelligt wird. Bei dieser Verbindungstechnik wird der Haltering, auch als Schiebehülse bezeichnet, von außen nicht sichtbar in Axialrichtung der Stützhülse und in Axialrichtung des auf der Stützhülse angeordneten Rohres, beispielsweise ein Verbundrohr aufgeschoben, wodurch das Rohr zwischen dem Haltering bzw. der Schiebehülse und der Stützhülse festgeklemmt wird. Der Haltering bzw. die Schiebehülse wird hierbei kaum sichtbar deformiert.

Die Erfindung ist jedoch auch bei einer Pressverbindung, bei der der Haltering bzw. Pressring radial nach innen relativ zur Achse einer Rohrverbindung bzw. eines darauf festgelegten Rohres verpresst wird, sehr nützlich, da besonders an unzugänglichen und dunklen Stellen auch ein deformierter Pressring nicht ohne weiteres zu erkennen ist. Die gemäß der Erfindung vorzusehende Markierung ist jedoch leicht erkennbar.

Je nach dem Typ von Werkzeug kann der Markierungsabschnitt bzw. kann die Markierungseinrichtung über verschiedenste mechanische Antriebsübertragungselemente angesteuert werden, etwa eine, zwei oder mehrere Stangen, Scherengestänge oder dgl.

Dabei ist es unwesentlich, ob der Antriebsabschnitt des Werkzeuges mit einem Elektromotor, einer hydraulischen Antriebseinrichtung oder dgl. versehen ist. Wesentlich ist nur die synchrone Kraftübertragung, wodurch auch veranlasst werden kann, dass, falls aus irgendeinem Grunde der Verbindungsvorgang abgebrochen wird, auf dem Rohr, das festzulegen gewesen wäre, keine Markierung erscheint, da in dem Falle des Abbruches die Pressbacken oder anders arbeitenden Verbindungsorgane des Werkzeuges nicht ausreichend weit bewegt worden sind, wobei synchron die Markierungseinrichtung nicht weit genug bewegt worden ist, um die Markierung auf dem betreffenden Rohr zu hinterlassen.

Vorteilhafterweise wird durch die Markierungseinrichtung eine optische Markierung hinterlassen, etwa eine Stempelung, eine Brandmarkierung, eine abrasive Markierung oder dgl. Am ehesten ist eine Stempelung zu bevorzugen. Eine Stempelung kann auch gleich eine Kennzeichnung desjenigen enthalten, der den Verbindungsvorgang bewerkstelligt hat, eventuell ein Datum, an dem der Verbindungsvorgang bewerkstelligt worden ist, usw.

Vorteilhafterweise ist der Markierungsabschnitt an dem Werkzeug festgelegt und ist zusammen mit einem gegenüber dem Antriebsabschnitt verdrehbaren Verbindungsbetätigungsabschnitt mit drehbar. Ein Verbindungsbetätigungsabschnitt, etwa in der Form von Pressbacken, ist häufig drehbar ausgebildet, um an schwer zugänglichen Stellen überhaupt die Durchführung eines Verbindungsvorganges durchführen zu können. Auch ist es nötig, bei einer fußbodennahen Verpressung eine andere Orientierung der Pressbacken gegenüber dem Antriebsabschnitt zu haben, als bei einer deckennahen Verpressung. In beiden Fällen ist es trotzdem möglich, erfindungsgemäß die Markierung vorzusehen, da zusammen mit dem verdrehten Verbindungsbetätigungsabschnitt bzw. Pressbacken oder dgl. auch immer synchron der Markierungsabschnitt und damit die Markierungseinrichtung, etwa ein Stempel mit verdreht wird.

Gemäß einem weiteren Aspekt der vorliegenden Erfindung wird eine Verbindungseinrichtung zum Verbinden eines Rohres, insbesondere eines Verbundrohres, mit einem Gegenstand, mit einer Stützhülse und mit einer Haltehülse versehen, wobei das Rohrende auf die Stützhülse aufgeschoben wird und die Haltehülse das auf der Stützhülse liegende Rohrende aufgeschoben wird. Wird dann ein Verbindungsvorgang durchgeführt, wird eine Markierung aktiviert, die unmittelbar der Haltehülse zuzuordnen ist.

Vorteilhafterweise kann diese Markierung in der Form einer Markierungsschicht vorgesehen sein. Im einfachsten Falle kann auf der Haltehülse bzw. Presshülse eine Farbschicht aufgetragen sein, die bei der Durchführung einer Verpressung, sei es eine axiale Verpressung oder eine radiale Verpressung, beschädigt wird und somit zu erkennen gibt, dass ein Verbindungsvorgang durchgeführt worden ist.

Es gibt auch druckempfindliche Markierungsschichten, die sich bei Auftreten eines mechanischen Druckes nach außen sichtbar verändern. Auch solche Markierungsschichten können verwendet werden.

Nachfolgend wird die vorliegende Erfindung unter Bezugnahme auf eine bevorzugte Ausführungsform näher beschrieben, wobei weitere erfindungsgemäße Merkmale, Zielsetzungen gemäß der Erfindung und Vorteile gemäß der Erfindung offenbart werden. In den Darstellungen zeigen:
- Fig. 1: eine schematische Ansicht eines Werkzeuges mit Merkmalen gemäß der Erfindung in einer Seitenansicht;
- Fig. 2: eine gegenüber Fig. 1 um 90° gedrehte Ansicht eines Werkzeuges mit Merkmalen gemäß Fig. 1; und
- Fig. 3: eine Draufsicht auf eine Ausführungsform gemäß der Erfindung in einer Darstellung entsprechend zu Fig. 2.

In den Figuren sind gleiche oder zumindest funktionsgleiche Bestandteile mit den gleichen Bezugszeichen benannt, so dass sich eine mehrfache Beschreibung demnach erübrigt.

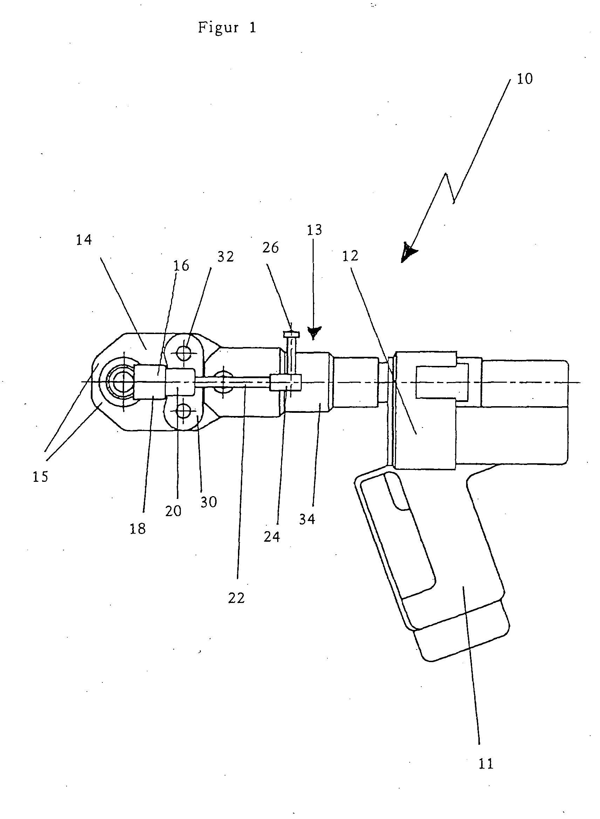

Die Fig. 1 zeigt ein Werkzeug 10 mit Merkmalen gemäß der Erfindung. Ein Antriebsabschnitt 12 mit einem Griffbereich 11 schließt über einen Getriebeabschnitt 13 an einen Verbindungsbetätigungsabschnitt 14 an.

Der Griffbereich 11 kann einen Einschub für eine Batterie bzw. einen Akku aufweisen. Es kann auch ein Anschluss für Druckluft oder dgl. vorgesehen sein.

Der Antriebsabschnitt 12 kann entsprechend der Energieversorgung einen Elektromotor aufweisen, einen Hydraulikzylinder enthalten, oder dgl.

Der Verbindungsbetätigungsabschnitt besteht hier aus Pressbacken, und insbesondere aus einem Paar von Pressbacken 15. Die Pressbacken sind schwenkbar über Bolzen 32 in einer Halteplatte 30 gehalten. Die Kraftübertragung zwischen dem Antriebsabschnitt 12 und dem Verbindungsbetätigungsabschnitt 14 kann in beliebiger Weise durchgeführt werden, etwa über eine Spindel oder dgl. Über ein Drehgelenk 34 kann der Verbindungsbetätigungsabschnitt 14 und mit ihm der Markierungsabschnitt 16 gegenüber dem Antriebsabschnitt 12 verdreht werden.

Der Markierungsabschnitt 16 ist über einen Befestigungsbolzen 26 an dem Getriebeabschnitt festgelegt, so dass ein Vorschub über das Getriebe, der Aktivitäten an den Pressbacken 14 auslöst, immer auch synchron den Markierungsabschnitt 16 bzw. die in Verbindung mit dem Markierungsabschnitt 16 vorgesehenen Markierungseinrichtungen bewegt. Vorteilhaft ist, dass über den Bolzen 26 der erfindungsgemäße Markierungsabschnitt auch nachträglich vorgesehen werden kann, also nicht integral mit einem Werkzeug hergestellt werden muss, d.h., eine Nachrüstung mit dem erfindungsgemäß vorzusehenden Markierungsabschnitt ist abhängig von dem Modell eines Werkzeuges jederzeit möglich, wobei lediglich die mechanische Anbindung bzw. Ankopplung an den Getriebeabschnitt oder an den Antriebsabschnitt 12 unterschiedlich sein kann.

Über eine Verbindungsstange 24 sowie eine weitere Verbindungsstange 22 kann dann auf eine Markierungseinrichtung (nicht dargestellt), die in dem Markierungsabschnitt 16 vorgesehen ist, eine Kraft ausgeübt werden. Dabei wird eine Führung der Verbindungsstange 22 dadurch erzielt, dass die Stange in einem Topf 20 mit einer oder mehreren Führungseinrichtungen, etwa Führungsplatten, geführt wird. Dabei kann die eigentliche Markierungseinrichtung in dem dem Topf 20 vorgelagerten Topf 18 angeordnet sein, in dem die Markierungseinrichtung, etwa ein Stempel, der Farbe aufstempelt, vor und zurück verlagert wird und in der zurückverlagerten Stellung geschützt wird.

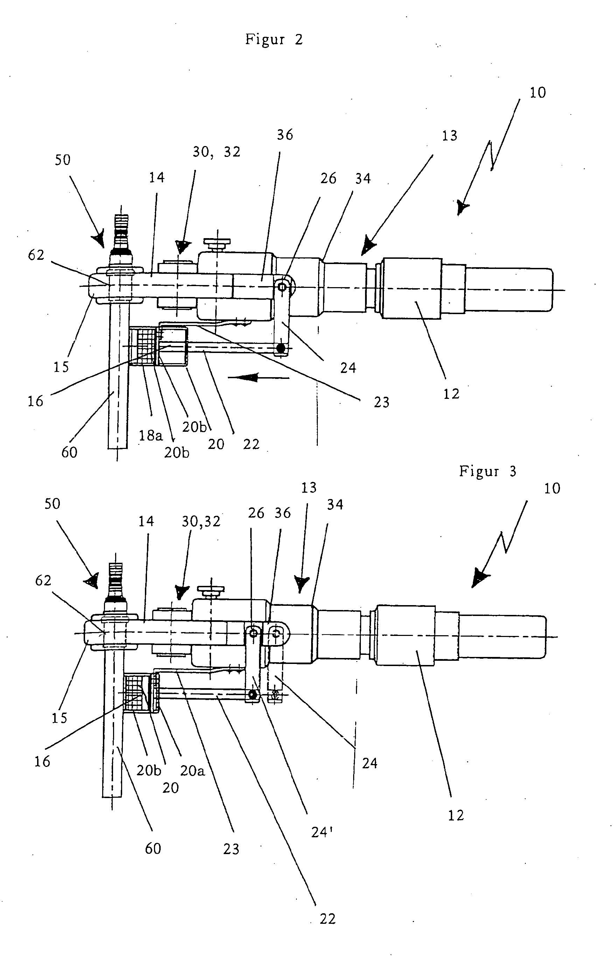

In der Fig. 2 ist eine Ausführungsform gemäß der Erfindung dargestellt, die bereits in Stellung zu einer Rohrverbindung 50 gebracht ist, an der ein Ende eines Rohres 60 festzulegen ist. Über das Ende des Rohres 60 ist bereits eine Presshülse 62 zum Zwecke einer radialen Verpressung aufgeschoben, respektive ist das Rohrende des Rohres 60 in den ringförmigen Zwischenraum zwischen dem bereits vorgesehenen Pressring 62 und einer darunter befindlichen Stützhülse (nicht dargestellt) geschoben worden. Dabei kann die Presshülse 62 vormontiert an der Verbindung 50 vorgesehen sein. Im dargestellten Fall ist das Werkzeug 10 bereits so angeordnet, dass dessen Betätigung unmittelbar nachfolgen kann.

Die Fig. 2 lässt über die in Fig. 1 dargestellten Bestandteile hinaus insbesondere Einzelheiten des Markierungsabschnittes 16 erkennen.

Der Markierungsabschnitt 16 weist einen vorgelagerten Topf 18 auf, in dem sich ein Stempel 20b befindet, der in der dargestellten Situation an einer hinteren Führungsplatte 20a angelehnt ist, die mit einer Öffnung versehen ist, durch die die Stange 22 vor und zurück bewegt werden kann, wobei die Stange und damit der Stempel über die Öffnung geführt werden. Ein nachgelagerter Topf 20 weist ebenfalls auf seiner Rückseite eine Öffnung auf, über die eine Führungsfunktion auf die Stange 20 ausgeübt werden kann. Der Markierungsabschnitt 16 insgesamt ist über eine Halteerstreckung 23 an dem Werkzeug 10 festgelegt.

In Fig. 3 ist eine leicht abgewandelte Form eines Werkzeuges 10 mit Merkmalen gemäß der Erfindung wiedergegeben, bei dem die Führungsfunktion lediglich über einen Topf 20 mit einer zentrisch gelochten Führungsplatte 20a bewerkstelligt wird. Dabei wird der Stempel 20b in dem Topf 20 geführt. In der dargestellten Situation ist das Gestänge 24, 22 aus seiner Ruheposition bereits in die Markierungsposition 22, 24' vorgeschoben worden, d.h., der Verbindungsbetätigungsabschnitt 14 ist bereits im Begriff, den Verbindungsvorgang durchzuführen. Nur noch ein geringer Abstand trennt das vordere Ende des Stempels 20b von der Außenwand des Rohres 60, um dieses zu markieren, und zwar in dem Augenblick, wenn die Verbindung fertig gestellt ist, d.h., die Presshülse 62 in dem erforderlichen Umfange radial nach innen verpresst worden ist.

In Bezug auf den zweiten Gesichtspunkt gemäß der Erfindung wird lediglich auf die Fig. 2 und 3 verwiesen, die eine Presshülse 62 zeigen, die mit einer (hier nicht erkennbaren) Markierungsschicht versehen sein kann. In diesem Falle kann durch den Verpressvorgang selbst und dem gemäß durch den in Kontakt zu der Presshülse 62 gelangenden Innenumfang der Pressbacken 15 selbst eine Markierung vorgesehen werden, die dem Betrachtet Aufschluss darüber geben kann, ob eine Verpressung durchgeführt worden ist oder nicht.

## Patentansprüche

1. Werkzeug zur Durchführung eines Verbindungsvorganges bei Rohrverbindungen, beispielsweise Verbundrohrverbindungen, insbesondere Presswerkzeug mit den folgenden Merkmalen:
- einem Verbindungsbetätigungsabschnitt (14), insbesondere einem Pressverbindungsabschnitt;
- einem Antriebsabschnitt (12), der den Verbindungsbetätigungsabschnitt zur Durchführung eines Verbindungsvorganges antreibt; **gekennzeichnet durch** die folgenden Merkmale:
- einem Markierungsabschnitt (16), der an dem Werkzeug (10) angeordnet ist; und
- der Markierungsabschnitt (16) ist an den Verbindungsabschnitt angekoppelt, um im Falle der Durchführung einer Verbindungsbetätigung eine Markierung zu hinterlassen.

2. Werkzeug nach Anspruch 1, **dadurch gekennzeichnet, dass** zwischen dem Verbindungsbetätigungsabschnitt und dem Antriebsabschnitt (12) ein Getriebeabschnitt (13) angeordnet ist, der eine Antriebskraft des Antriebsabschnitts auf den Verbindungsbetätigungsabschnitt (14) überträgt.

3. Werkzeug nach einem der Ansprüche 1 oder 2, **dadurch gekennzeichnet, dass** der Markierungsabschnitt (16) mit dem Antriebsabschnitt (12), dem Getriebeabschnitt (13) oder dem Verbindungsbetätigungsabschnitt (14) direkt verbunden ist, um eine Markierungseinrichtung (20b) im Falle der Durchführung eines Verbindungsvorganges zu betätigen bzw. zu bewegen.

4. Werkzeug nach einem der Ansprüche 1 bis 3, **dadurch gekennzeichnet, dass** der Verbindungsbetätigungsabschnitt (14) ausgebildet ist, um einen Haltering (62) bzw. eine Schiebehülse axial zu einer Rohrverbindung zu verbringen, um ein Rohr (60) an der Rohrverbindung festzulegen.

5. Werkzeug nach einem der Ansprüche 1 bis 3, **dadurch gekennzeichnet, dass** der Verbindungsabschnitt ausgebildet ist, um einen Haltering bzw. eine Presshülse radial nach innen relativ zur Achse einer Rohrverbindung (50) zu verpressen, um ein Rohr (60) an der Rohrverbindung festzulegen.

6. Werkzeug nach einem der Ansprüche 3 bis 5, **dadurch gekennzeichnet, dass** die Markierungseinrichtung über wenigstens ein mechanisches Antriebsübertragungselement (26, 24, 22), etwa eine, zwei oder mehrere Stangen, Scherengestänge oder dgl., bewegbar ist.

7. Werkzeug nach einem der Ansprüche 1 bis 6, **dadurch gekennzeichnet, dass** die Markierungseinrichtung (20b) eine optische Markierung bewerkstelligt, etwa eine Stempelung, eine Brandmarkierung, eine abrasive Markierung oder dgl.

8. Werkzeug nach einem der Ansprüche 1 bis 7, **dadurch gekennzeichnet, dass** der Markierungsabschnitt an dem Werkzeug festgelegt ist, etwa über eine Metallverbindungsstange (23) oder dgl.

9. Werkzeug nach einem der Ansprüche 1 bis 8, **dadurch gekennzeichnet, dass** der Markierungsabschnitt so angebracht ist, dass bei einer Verdrehung des Verbindungsbetätigungsabschnittes gegenüber dem Antriebsabschnitt der Markierungsabschnitt (14) so mitbewegt wird, dass dieser bei einem Verbindungsvorgang eine Markierung bewerkstelligt.
